# EUROPEAN PATENT SPECIFICATION

(11) **EP 2 641 506 B1**
(45) Date of publication and mention of the grant of the patent: **16.05.2018**
(21) Application number: 12305324.1
(22) Date of filing: 19.03.2012
(51) Int. Cl.: B32B 37/12, A47B 96/02, A47B 96/20, B32B 3/28, B32B 7/12, B32B 15/12, B32B 15/04, B32B 3/08

(54) **Ultra-thin shelf for displaying articles, configured to be mounted on a shelving device**
Ultradünne, zur Montage an eine Regalvorrichtung konfigurierte Ablage zum Ausstellen von Artikeln
Étagère ultra-mince permettant de présenter des articles, configurée pour être montée sur un dispositif de rayonnage

(43) Date of publication of application: 25.09.2013
(73) Proprietor: HMY Group, 89470 Moneteau (FR)
(72) Inventor: Hervieux, Philippe, 89113 Fleury la Vallée (FR)
(74) Representative: Santarelli

(56) References cited:
- WO-A1-03/037619
- WO-A2-2004/035966
- CN-Y- 2 260 702
- DE-A1-102007 058 474
- US-A- 6 080 495
- US-A1- 2002 043 187
- US-A1- 2004 091 722
- US-A1- 2004 178 156

## Description

### FIELD OF THE INVENTION

The invention relates to shelving devices comprising shelves for displaying articles.

### BACKGROUND ART

Shelving devices comprising a plurality of shelves for displaying articles are well known from the European patent application EP 1 988 801 in which the shelving device, also named gondola, comprises a base, a plurality of vertical columns which extend from the base and a plurality of shelves, also named sales shelves, each mounted on two successive vertical columns.

Many articles are resting on the shelves so that the latter have to bear the weight of these articles, which weight can be heavy. The shelves have thus to be substantially rigid and must tolerate a shear stress which is high.

The shelves are generally each formed by a metal plate having the features mentioned above and thus allowing to be loaded with many articles. To obtain these features, the plate has a sufficient thickness, for instance between around 0.6mm to 1.5mm.

A prior art shelving structure is known from US2004/0178156.

The price of raw material increases, in particular metal, it is thus needed to find solutions for decreasing the volume of raw material for manufacturing shelves, while maintaining the mechanical features.

The European patent application EP 2 073 668 describes shelves which each comprises a flat metal plate, two lateral reinforcing rods disposed at lateral ends of the metal plate and longitudinal reinforcing rods disposed under the metal plate. The two lateral reinforcing rods and the longitudinal reinforcing rods are fixed to the plate by welding or punching. The metal plate can be thinner than the metal plate described in EP 1 988 801 but sufficiently thick to be welded or punched. For instance, the metal plate described in EP 2 073 668 has a thickness comprised between around 0.5mm to 1.5mm.

The invention is directed to a shelving device comprising a shelf for displaying articles, which shelf is simple, compact, economic and easy to manufacture.

### SUMMARY OF THE INVENTION

The invention accordingly provides a shelving device comprising the features as recited in claim 1.

The shelf of the shelving device according to the invention is thus convenient in that the combination of the upper metal sheet and the bearing member, which further acts as a reinforcing member for the upper metal sheet, are simply assembled thanks to a glue composition which forms an adhesive.

It is the use of an upper metal sheet which allows assembling the latter together with the bearing member only thanks to at least one first adhesive layer, without supplemental mechanical member and without subjecting the upper metal sheet to mechanical stresses due to steps of punching or welding.

For that matter, such steps of punching or welding are inconvenient to such an upper metal sheet according to the invention because the upper metal sheet could be deteriorated by the stresses issued from such steps.

The shelf of the shelving device according to the invention is thus different from the shelf described in the state or the art mentioned in the background art of the present application in that the shelf according to the invention does not comprise an upper meta! plate but rather an upper metal sheet.

Thus, the ultra-thin shelf of the shelving device according to the invention is simple, compact, economic and easy to manufacture while having high mechanical
features, in particular regarding the shear stresses, which allow the shelf to bear many articles.

According to features preferred as being very simple, convenient and economical for embodying the shelving device according to the invention:
- said upper metal sheet has a first thickness between around 0.1mm and around 0.3mm;
- said shelf further comprises a lower panel which is opposed to said upper metal sheet so that said bearing member is sandwiched between said lower panel and said upper metal sheet;
- said lower panel is formed by a lower metal sheet having a second thickness between around 0.1mm and around 0.3mm.;
- said shelf further comprises at least one second adhesive layer disposed between said lower panel and said bearing member so that said bearing member and said lower panel are fixed together by said at least one second adhesive layer;
- said shelf further comprises at least one spacer sandwiched between said bearing member and at least one of said upper metal sheet and lower panel;
- said spacer is formed by a plurality of rolls embedded in at least one of said at least one first adhesive layer and at least one second adhesive layer;
- said shelf extends longitudinally and said bearing member comprises a plurality of ripples so that said bearing member has a general corrugated shape which transversally extends to said shelf;
- said bearing member has a general alveolus shape;
- said bearing member is rigid and made from metal;
- said bearing member is semi-rigid and made from cardboard; and/or
- said shelf extends longitudinally and has lateral faces having a right-angled triangle shape.

### BRIEF DESCRIPTION OF THE DRAWINGS

The description of the invention now continues with a detailed description of a preferred embodiment given hereinafter by way of non-limiting example and with reference to the appended drawings. In these drawings:
- Figure 1 is a perspective view of a shelving device comprising a plurality of shelves;
- Figures 2 and 3 are respectively a partial assembled perspective view and a partial exploded perspective view of a shelf shown in Figure 1;
- Figure 4 is a section view taken along IV on Figure 3;
- Figures 5 and 6 are respectively a partial assembled perspective view and a partial exploded perspective view of a variant of the shelf shown in Figure 1; and
- Figure 7 is a section view taken along VII on Figure 6.

### DETAILED DESCRIPTION OF PREFERED EMBODIMENTS

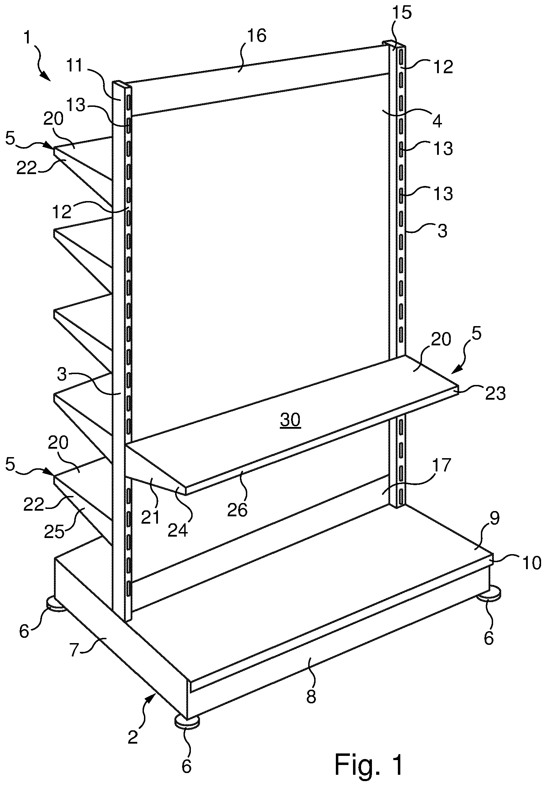

Figure 1 shows a shelving device 1, also named gondola, which is used to display articles (not represented).

The shelving device 1 is configured to be disposed for instance in a supermarket and to receive articles to display for instance for sale.

The shelving device 1 comprises a base 2, two vertical columns 3 extending from the base 2, a back panel 4 also extending from the base 2 and disposed between the two vertical columns 3 and a plurality of shelves 5.

The base 2 is made from metal and comprises horizontal stringers (not represented) which form a frame, four side walls whose only two side walls 7 and 8 are visible on Figure 1 and a panel 9 which covers the frame.

The panel 9 is flat and comprises a ledge 10 extending in front of the side wall 8.

The base 2 further comprises feet 6 whose only three are visible on Figure 1.

The two vertical columns 3 are made from metal and have each a general shape of a rod having a rectangular section.

A plurality of openings 13 are provided both in the front face 12 and in the back face.

Each opening 13 has a rectangular general shape whose corners are rounded.

The back panel 4 is a flat metal back panel which is sandwiched between the two vertical columns 3.

The back panel 4 comprises a first lateral end and a second lateral end opposite to the first lateral end, which are each mounted on a respective interior lateral face 15 of a vertical column 3.

The back panel 4 further comprises an upper edge and a lower edge opposite to the upper edge, which upper and lower edges come each into abutment against a respective spacer 16, 17 that comprised the shelving device 1.

The spacer 16 is disposed between the two vertical columns 3 and is mounted, like the back panel 4, on the respective interior lateral faces 15 of the vertical columns 3.

This spacer 16 is situated in the vicinity of the respective free ends of the vertical columns 3, opposite to the panel 9 of the base 2.

The spacer 17 is also disposed between the two vertical columns 3 and is mounted, like the back panel 4, on the respective interior lateral face 15 of the vertical columns 3.

The spacer 17 is thus situated at the opposite of the spacer 16, in other words in the vicinity of the respective ends of the vertical column, the ends being opposite to the free ends, and in the vicinity of the panel 9 of the base 2.

As shown in Figure 1, the shelving device 1 comprises a plurality of shelves 5. Here, one shelf 5 is mounted on a front face of the shelving device 1 and five shelves 5 are mounted on the back of the shelving device 1.

Each shelf 5 is configured to be mounted on the back panel 4 and in particular each shelf 5 is configured to be hung to the two vertical columns 3 thanks to hanging members like hooks (not represented), hooks which are configured to be mounted on respective openings 13 of the vertical columns 3.

Each shelf is thus mounted on the back panel 4 so that each shelf 5 overhangs the base 4, and in particular the panel 9.

Each shelf 5 comprises an upper face 20, two lateral faces 21 and 22 which are opposite to each other and a front face 23 linking both lateral faces 21 and 22.

The lateral faces 21 and 22 and the front face 23 are configured to form a roof-deck for the shelf 5.

The upper face 20, the lateral faces 21 and 22 and the front face 23 are made from a single metal sheet 30 which comprises two lateral edges 24 and 25 which are opposite to each other and a front edge 26, all these edges being folded to form the roof-deck.

The upper metal sheet 30 comprises two cut-outs provided respectively at a junction between the lateral edge 24 and the front edge 26 and at a junction between the lateral edge 25 and the front edge 26 in order to allow folding of it to form the roof-deck.

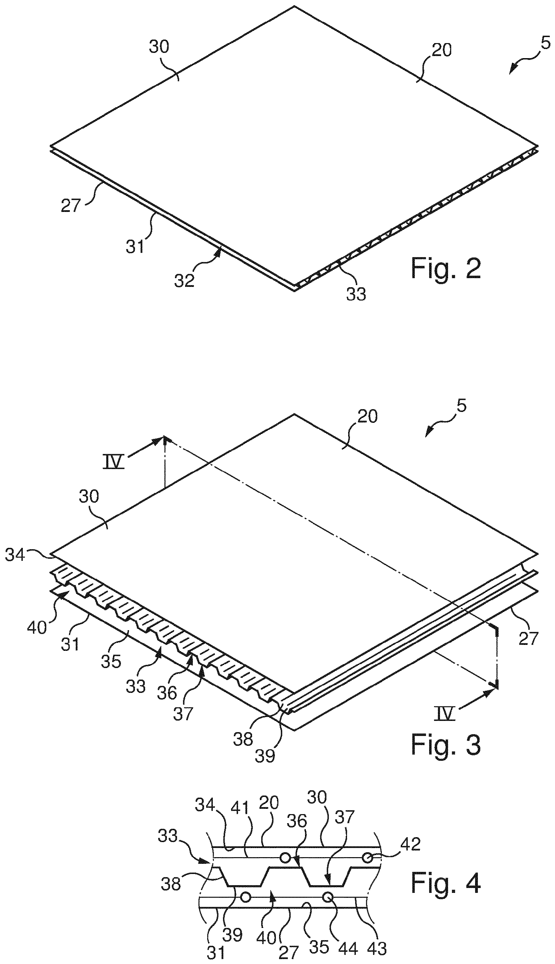

We will now describe in detail the structure of each shelf 5 with respect to Figures 2 to 4.

Figure 2 partially shows the shelf 5 and in particular the upper metal sheet 30 in an assembled state and Figure 3 partially shows the shelf 5 in an exploded state.

Further, Figure 4 partially shows the shelf 5 in section taken along IV on Figure 3.

The shelf 5 further comprises a lower face 27 at the opposite of the upper face 20.

The shelf 5 further comprises a lower metal sheet 31 facing the upper metal sheet 30 and a metal bearing member 33 sandwiched between the upper metal sheet 30 and the lower metal sheet 31.

The upper metal sheet 30 has an exterior face formed by the upper face 20 of the shelf 5 and an interior face 34 at the opposite of the exterior face 20.

The upper metal sheet 30 has a first thickness between around 0.1mm and around 0.3mm. Here, the upper metal sheet 30 has a first thickness equal to around 0.2mm. The upper metal sheet 30 is thus ultra-thin.

The lower metal sheet 31 comprises an exterior face which forms the lower face 27 of the shelf 5 and an interior face 35 at the opposite of the exterior face 27.

The lower metal sheet 31 has a second thickness also between around 0.1mm and around 0.3mm. Here, the lower metal sheet 31 has a second thickness equal to around 0.2mm so that the lower metal sheet 31 is ultra-thin.

The upper metal sheet 30 faces the lower metal sheet 31 and is remote to the latter from a predetermined distance.

Thus, a space 32 is defined between the upper metal sheet 30 and the lower metal sheet 31.

The space 32 has here a constant height so that the upper metal sheet 30 and the lower metal sheet 31 are parallel.

The bearing member 33 is rigid and made from metal, as mentioned above, and is configured to reinforce both the upper metal sheet 30 and the lower metal sheet 31.

Here, the metal bearing member 33 has a general corrugated shape having a plurality of ripples 40.

The metal bearing member 33 has a third thickness between around 0.1mm and around 0.3mm. Here, the metal bearing member 33 has a third thickness equal to around 0.2mm.

Each ripple 40 is formed by a tooth 36 or a hollow 37.

The metal bearing member 33 is thus provided with a sequence of horizontal portions 39 and inclined portions 38 to form alternatively hollows 37 and teeth 36.

The shelf 5 and in particular the upper metal sheet 30, the lower metal sheet 31 and the metal bearing member 33 generally extend longitudinally and the general corrugated shape formed by the ripples 40 of the metal bearing member 33 transversally extends to the shelf 5.

The metal bearing member 33 faces at least a major portion, here the whole surface, of the upper metal sheet 30 and faces at least a major portion, here the whole surface, of the lower metal sheet 31 so that the metal bearing member 33 is configured to reinforce both the upper metal sheet 30 and the lower metal sheet 31.

The shelf 5 further comprises a first adhesive layer 41 disposed between the upper metal sheet 30 and the metal bearing member 33 and a plurality of spacers formed by rolls 42 which are embedded in the first adhesive layer 41.

The first adhesive layer 41 coats the major portion of the interior face 34 of the upper metal sheet 30 and/or the horizontal portions 39 of the metal bearing member 33 which are in the vicinity of the interior face 34 of the upper metal sheet 30.

The rolls 42 are configured to define a sufficient and predetermined thickness of the first adhesive layer 41.

The metal bearing member 33 and the upper metal sheet 30 are thus fixed together by the first adhesive layer 41.

The shelf 5 further comprises a second adhesive layer 43 disposed between the lower metal sheet 31 and the metal bearing member 33 and a plurality of spacers formed by rolls 44 which are embedded in the second adhesive layer 43.

The second adhesive layer 42 coats the major portion of the interior face 35 of the lower metal sheet 31 and/or the horizontal portions 39 of the metal bearing member 33 which are in the vicinity of the interior face 35 of the lower metal sheet 31.

The rolls 44 are configured to define a sufficient and predetermined thickness of the second adhesive layer 43.

The metal bearing member 33 and the lower metal sheet 31 are thus fixed together by the second adhesive layer 43.

We will now describe the method for manufacturing the shelf 5.

There is needed to provide the upper metal sheet 30, the lower metal sheet 31, the metal bearing member 33 and an adhesive composition made from glue and a plurality of rolls 42 and 44 embedded in the adhesive composition.

Next, there is needed to deposit a first layer 41 of the adhesive on at least a major portion of the interior face 34 of the upper metal sheet 30 and/or on the horizontal portions 39 of the metal bearing member 33 which are in the vicinity of said interior face 34; and to deposit a second layer 43 of the adhesive on at least a major portion of the interior face 35 of the lower metal sheet 31 and/or on the horizontal portions 39 of the metal bearing member 33 which are in the vicinity of said interior face 35.

The metal bearing member 33 is thus sandwiched between the first adhesive layer 41 and the second adhesive layer 43.

Next, it is needed to face the metal bearing member 33 to at least the major portion of the interior face 34 of the upper metal sheet 30 and to bring the metal bearing member 33 and the upper metal sheet 30 against each other so that the metal bearing member 33 and the upper metal sheet 30 are fixed together by the first adhesive layer 41; and to also face the metal bearing member 33 to at least the major portion of the interior face 35 of the lower metal sheet 31 and to bring the metal bearing member 33 and the lower metal sheet 31 against each other so that the metal bearing member 33 and the lower metal sheet 31 are fixed together by the second adhesive layer 42.

The shelf 5 is thus manufactured in a convenient and simple manner and has high mechanical features, in particular regarding the mechanical resistance to shear stresses. For instance, the shelf 5 has a mechanical resistance to shear stresses between around 200kg/m² and around 350kg/m². Here, the shelf 5 has a mechanical resistance to shear stresses equal to around 250kg/m².

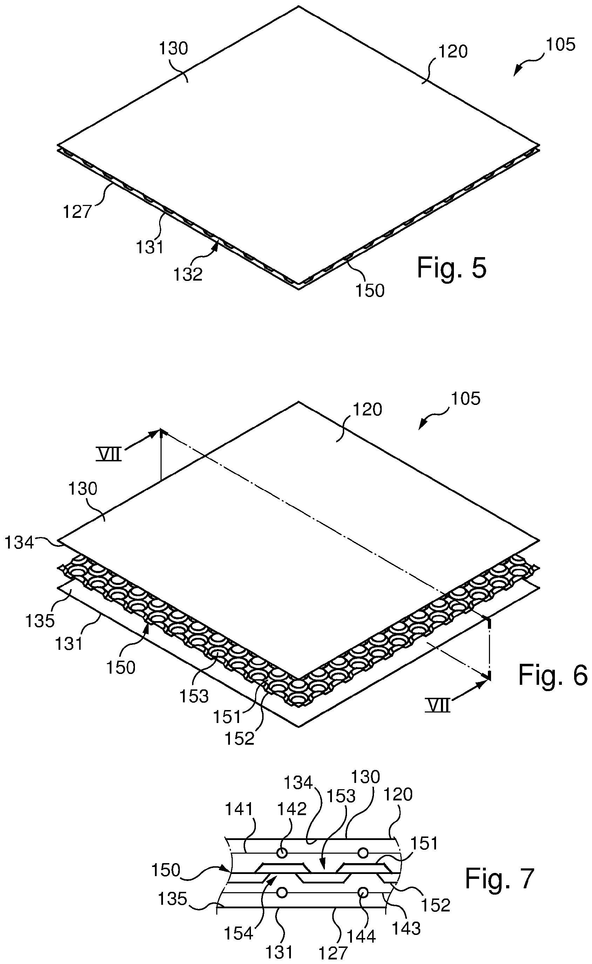

Figures 5 to 7 illustrate a variant embodiment of the shelf and are similar views to the Figures 2 to 4.

In general, we have used the same reference numbers for similar parts, but increased by 100.

The shelf 105 shown in Figures 5 to 7 is almost identical to the shelf 5 shown in Figures 2 to 4 and the method for manufacturing this shelf 105 is almost identical, except that the bearing member 150 of the shelf 105 differs from the bearing member 33 of the shelf 5.

Figure 5 partially shows the shelf 105 in an assembled state and Figure 6 partially shows the shelf 105 in an exploded state.

Further, Figure 7 partially shows the shelf 105 in section taken along VII on Figure 6.

The shelf 105 comprises an upper face 120 and a lower face 127 at the opposite of the upper face 120.

The shelf 105 comprises an upper metal sheet 130 and a lower metal sheet 131 facing the upper metal sheet 130 and a metal bearing member 150 sandwiched between the upper metal sheet 130 and the lower metal sheet 131.

The upper metal sheet 130 has an exterior face formed by the upper face 120 of the shelf 105 and an interior face 134 at the opposite of the exterior face 120; and the upper metal sheet 130 has a first thickness between around 0.1mm and around 0.3mm, and in particular here, the upper metal sheet 130 has a first thickness equal to around 0.2mm.

The lower metal sheet 131 comprises an exterior face which forms the lower face 127 of the shelf 105 and an interior face 135 at the opposite of the exterior face 127; and the lower metal sheet 131 has a second thickness also between around 0.1mm and around 0.3mm, and in particular here, the lower metal sheet 131 has a second thickness equal to around 0.2mm.

The upper metal sheet 130 faces the lower metal sheet 131 and is remote to the latter from a predetermined distance defined by a space 132 provided between the upper metal sheet 130 and the lower metal sheet 131.

The space 132 has here a constant height so that the upper metal sheet 130 and the lower metal sheet 131 are parallel.

The bearing member 150 is semi-rigid and made from cardboard and is configured to reinforce both the upper metal sheet 130 and the lower metal sheet 131.

Here, the cardboard bearing member 150 has a general alveolus shape. The bearing member 150 comprises two layers of cardboard 151 and 152, in each of which are provided a plurality of cylindrical recesses 153 forming each an alveolus.

The cardboard bearing member 150 has a fourth thickness between around 0.1mm and around 0.3mm, and in particular here, each layer 151, 152 of the cardboard bearing member 150 has a fourth thickness equal to around 0.1mm.

The cardboard bearing member 150 faces at least a major portion, here the whole surface, of the upper metal sheet 130 and faces at least a major portion, here the whole surface, of the lower metal sheet 131 so that the cardboard bearing member 150 is configured to reinforce both the upper metal sheet 130 and the lower metal sheet 131.

The shelf 105 further comprises a first adhesive layer 141 disposed between the upper metal sheet 130 and the cardboard bearing member 133 and a plurality of spacers formed by rolls 142 which are embedded in the first adhesive layer 141.

The first adhesive layer 141 coats the major portion of the interior face 134 of the upper metal sheet 130 and/or the layer 151 facing the interior face 134 of the upper metal sheet 130.

The rolls 142 are configured to define a sufficient and predetermined thickness of the first adhesive layer 141.

The cardboard bearing member 150 and the upper metal sheet 130 are thus fixed together by the first adhesive layer 141.

The shelf 105 further comprises a second adhesive layer 143 disposed between the lower metal sheet 131 and the cardboard bearing member 150 and a plurality of spacers formed by rolls 144 which are embedded in the second adhesive layer 143.

The second adhesive layer 142 coats the major portion of the interior face 134 of the lower metal sheet 131 and/or the layer 152 of the cardboard bearing member 150 which faces the interior face 135 of the lower metal sheet 131.

The rolls 144 are configured to define a sufficient and predetermined thickness of the second adhesive layer 143.

The cardboard bearing member 150 and the lower metal sheet 131 are thus fixed together by the second adhesive layer 143.

The method for manufacturing the shelf 105 comprises the following steps.

There is needed to provide the upper metal sheet 130, the lower metal sheet 131, the cardboard bearing member 150 and an adhesive composition made from glue and a plurality of rolls 142 and 144 embedded in the adhesive composition.

Next, there is needed to deposit a first layer 141 of the adhesive on at least a major portion of the interior face 134 of the upper metal sheet 130 and/or on the cardboard layer 151 of the bearing member 150; and to deposit a second layer 143 of the adhesive on at least a major portion of the interior face 135 of the lower metal sheet 131 and/or on the cardboard layer 152 of the bearing member 150.

The cardboard bearing member 150 is thus sandwiched between the first adhesive layer 141 and the second adhesive layer 143.

Next, it is needed to face the cardboard bearing member 150 to at least the major portion of the interior face 134 of the upper metal sheet 130 and to bring the cardboard bearing member 150 and the upper metal sheet 130 against each other so that the cardboard bearing member 150 and the upper metal sheet 130 are fixed together by the first adhesive layer 141; and to face also the cardboard bearing member 150 to at least the major portion of the interior face 135 of the lower metal sheet 131 and to bring the cardboard bearing member 150 and the lower metal sheet 131 against each other so that the cardboard bearing member 150 and the lower metal sheet 131 are fixed together by the second adhesive layer 142.

The shelf 105 is thus manufactured as a convenient and simple manner and has high mechanical features, in particular regarding the mechanical resistance to shear stresses. For instance, the shelf 105 has a mechanical resistance to shear stresses between around 200kg/m² and around 350kg/m². Here, the shelf 105 has a mechanical resistance to shear stresses equal to around 250kg/m².

In variants that are not illustrated:
- the upper face, the lateral faces and the front face of the upper metal sheet are not made from a single metal sheet, but only the upper face is made from an upper metal sheet and the lateral faces and the front face of the shelf are each made from a single and distinct metal sheet which are assembled to the upper metal sheet;
- the upper sheet and/or the lower sheet has not a thickness equal to around 0.2mm but rather more or less in the range comprises between around 0.1mm and 0.3mm;
- the space defined between the upper metal sheet and the lower metal sheet has not has a constant height, but rather the space has a first height in the vicinity of the front edge 4 and a second height in the vicinity of the back panel 26, the first height being smaller than the second height, so that the upper metal sheet and the lower metal sheet are not parallel;
- the upper sheet and/or the lower sheet has a flat surface or not a flat surface, for instance a curved surface or a warped surface;
- the shelf does not comprise a lower sheet but only an upper sheet and a bearing member fixed to the upper sheet thanks to an adhesive layer;
- at least one of the at least one first adhesive layer and the at least one second adhesive layer does not comprise rolls;
- the bearing member is not made from metal or from cardboard but rather made from plastic material;
- the bearing member does not face the whole surface of the upper sheet and/or the lower sheet but only at least a major portion smaller than the whole surface;
- the bearing member has not an alveolus shape or a corrugated shape but another shape which allows the shelf resisting to shear stresses; and/or
- the shelf according to the invention and/or the shelving device having at least one said shelf is not used in sales area but rather in storage are.

It should be noted more generally that the invention is not limited to the examples described and represented.

## Claims

1. Shelving device comprising a base (2), only two vertical columns (3) extending from said base (2), a flat metal back panel (4) also extending from said base (2), sandwiched between said two vertical columns (3) and mounted on interior lateral faces of said two vertical columns, and at least one shelf (5; 105) for displaying articles which is mounted on said back panel (4), and which overhangs said base (2); wherein said at least one shelf (5; 105) comprises an upper metal sheet (30; 130), a bearing member (33; 150) facing to at least a major portion of said upper metal sheet (30; 130), said bearing member (33; 150) being configured to reinforce said upper metal sheet (30; 130) and at least one first adhesive layer (41; 141) disposed between said upper metal sheet (30; 130) and said bearing member (33; 150), so that said bearing member (33; 150) and said upper metal sheet (30; 130) are fixed together by said at least one first adhesive layer (41; 141).

2. Shelving device according to claim 1, wherein said upper metal sheet (30; 130) has a first thickness between around 0.1mm and around 0.3mm.

3. Shelving device according to one of claims 1 and 2, wherein it further comprises a lower panel (31; 131) which is opposed to said upper metal sheet (30; 130) so that said bearing member (33; 150) is sandwiched between said lower panel (31; 131) and said upper metal sheet (30; 130).

4. Shelving device according to claim 3, wherein said lower panel is formed by a lower metal sheet (31; 131) having a second thickness between around 0.1mm and around 0.3mm.

5. Shelving device according to one of claims 3 and 4, wherein it further comprises at least one second adhesive layer (43; 143) disposed between said lower panel (31; 131) and said bearing member (33; 150) so that said bearing member (33; 150) and said lower panel (31; 131) are fixed together by said at least one second adhesive layer (43; 143).

6. Shelving device according to any one of claims 1 to 5, wherein it further comprises at least one spacer (42, 44; 142, 144) sandwiched between said bearing member (33; 150) and at least one of said upper metal sheet (30; 130) and lower panel (31; 131).

7. Shelving device according to claim 6, wherein said spacer is formed by a plurality of rolls (42, 44; 142, 144) embedded in at least one of said at least one first adhesive layer (41; 141) and at least one second adhesive layer (43; 143).

8. Shelving device according to any one of claims 1 to 7, wherein it generally extends longitudinally and said bearing member (33) comprises a plurality of ripples (40) so that said bearing member (33) has a general corrugated shape which transversally extends to said shelf (5).

9. Shelving device according to any one of claims 1 to 7, wherein said bearing member (150) has a general alveolus shape.

10. Shelving device according to any one of claims 1 to 9, wherein said bearing member (33) is rigid and made from metal.

11. Shelving device according to any one of claims 1 to 9, wherein said bearing member (150) is semi-rigid and made from cardboard.

12. Shelving device according to any one of claims 1 to 11, wherein it generally extends longitudinally and has lateral faces (21, 22) having a right-angled triangle shape.

## Patentansprüche

1. Regalvorrichtung, enthaltend eine Grundplatte (2), nur zwei vertikale Säulen die von der Grundplatte (2) ausgehend verläuft, eine flache metallene Rückwandplatte (4) die auch von der Grundplatte (2) ausgehend verläuft, die zwischen den zwei vertikalen Säulen (3) sandwichartig angeordnet ist, und die auf die Innenseitenflächen der zwei vertikalen Säulen montiert ist, und zumindest einen Regalboden (5; 105) zum Ausstellen von Gegenständen, der an die Rückwandplatte (4) montiert ist und die Grundplatte (2) überragt, wobei der zumindest eine Regalboden (5; 105) ein oberes Metallblech (30; 130) und ein Tragglied (33; 150) aufweist, das zumindest einem Großteil des oberen Metallblechs (30; 130) gegenüberliegt, wobei das Tragglied (33; 150) so gestaltet ist, dass es das obere Metallblech (30; 130) verstärkt, sowie zumindest eine erste Haftschicht (41; 141), die zwischen dem oberen Metallblech (30; 130) und dem Tragglied (33; 150) angeordnet ist, so dass das Tragglied (33; 150) und das obere Metallblech (30; 130) über die zumindest eine erste Haftschicht (41; 141) aneinander fixiert sind.

2. Regalvorrichtung nach Anspruch 1, wobei das obere Metallblech (30; 130) eine erste Dicke zwischen etwa 0,1 mm und etwa 0,3 mm aufweist.

3. Regalvorrichtung nach einem der Ansprüche 1 und 2, wobei sie ferner eine untere Platte (31; 131) aufweist, die dem oberen Metallblech (30; 130) entgegengesetzt ist, so dass das Tragglied (33; 150) zwischen der unteren Platte (31; 131) und dem oberen Metallblech (30; 130) sandwichartig aufgenommen ist.

4. Regalvorrichtung nach Anspruch 3, wobei die untere Platte von einem unteren Metallblech (31; 131) gebildet wird, das einen Dicke zwischen etwa 0,1 mm und etwa 0,3 mm aufweist.

5. Regalvorrichtung nach einem der Ansprüche 3 und 4, wobei sie ferner zumindest eine zweite Haftschicht (43; 143) aufweist, die zwischen der unteren Platte (31; 131) und dem Tragglied (33; 150) angeordnet ist, so dass das Tragglied (33; 150) und die untere Platte (31; 131) über die zumindest eine zweite Haftschicht (43; 143) aneinander fixiert sind.

6. Regalvorrichtung nach einem der Ansprüche 1 bis 5, wobei sie ferner zumindest einen Abstandshalter (42, 44; 142, 144) aufweist, der zwischen dem Tragglied (33; 150) und zumindest einem Element aus oberem Metallblech (30; 130) und unterer Platte (31; 131) sandwichartig aufgenommen ist.

7. Regalvorrichtung nach Anspruch 6, wobei der Abstandshalter aus einer Mehrzahl von Rollen (42, 44; 142, 144) gebildet ist, die in zumindest einem Element aus der zumindest einen ersten Haftschicht (41; 141) und zumindest einer zweiten Haftschicht (43; 143) eingebettet sind.

8. Regalvorrichtung nach einem der Ansprüche 1 bis 7, wobei sie sich im Wesentlichen longitudinal erstreckt und das Tragglied (33) eine Mehrzahl von Riffeln (40) aufweist, so dass das Tragglied (33) eine im Wesentlichen korrugierte Form hat, die sich quer zum Regalboden (5) erstreckt.

9. Regalvorrichtung nach einem der Ansprüche 1 bis 7, wobei das Tragglied (150) im Wesentlichen wabenförmig ist.

10. Regalvorrichtung nach einem der Ansprüche 1 bis 9, wobei das Tragglied (33) starr und aus Metall hergestellt ist.

11. Regalvorrichtung nach einem der Ansprüche 1 bis 9, wobei das Tragglied (150) halbstarr und aus Pappe hergestellt ist.

12. Regalvorrichtung nach einem der Ansprüche 1 bis 11, wobei sie sich im Wesentlich longitudinal erstreckt und Seitenflächen (21, 22) aufweist, die eine Form eines rechtwinkligen Dreiecks haben.

## Revendications

1. Rayonnage comprenant une base (2), seulement deux montants verticaux (3) s'étendant depuis la base (2), un panneau arrière plat en métal (4) s'étendant depuis ladite base (2), pris en sandwich entre les deux dits montants verticaux (3) et monté sur des faces latérales intérieures des deux dits montants verticaux, et au moins une tablette (5 ; 105), pour présenter des articles, qui est montée sur ledit panneau arrière (4) et qui surplombe ladite base (2) ; ladite au moins une tablette (5 ; 105) comprenant une feuille de métal supérieure (30 ; 130), un élément de support (33 ; 150) tourné vers au moins une partie principale de ladite feuille de métal supérieure (30 ; 130), ledit élément de support (33 ; 150) étant conçu pour renforcer ladite feuille de métal supérieure (30 ; 130) et au moins une première couche adhésive (41 ; 141) disposée entre ladite feuille de métal supérieure (30 ; 130) et ledit élément de support (33 ; 150), de manière que ledit élément de support (33 ; 150) et ladite feuille de métal supérieure (30 ; 130) soient fixés l'un à l'autre par ladite au moins une première couche adhésive (41 ; 141).

2. Rayonnage selon la revendication 1, dans lequel ladite feuille de métal supérieure (30 ; 130) a une première épaisseur comprise entre environ 0,1 mm et environ 0,3 mm.

3. Rayonnage selon la revendication 1 ou 2, dans lequel le rayonnage comprend, en outre, un panneau inférieur (31 ; 131) qui est situé en regard de ladite feuille de métal supérieure (30 ; 130) de manière que ledit élément porteur (33 ; 150) soit pris en sandwich entre ledit panneau inférieur (31 ; 131) et ladite feuille de métal supérieure (30 ; 130).

4. Rayonnage selon la revendication 3, dans lequel ledit panneau inférieur est formé par une feuille de métal supérieure (30 ; 130) ayant une seconde épaisseur comprise entre environ 0,1 mm et environ 0,3 mm.

5. Rayonnage selon l'une quelconque des revendications 3 et 4, dans lequel le rayonnage comprend, en outre, au moins une seconde couche adhésive (43 ; 143) disposée entre ledit panneau inférieur (31 ; 131) et ledit élément porteur (33 ; 150) de manière que ledit élément porteur (33 ; 150) et ledit panneau inférieur (31 ; 131) soient fixés l'un à l'autre par ladite au moins une seconde couche adhésive (43 ; 143).

6. Rayonnage selon l'une quelconque des revendications 1 à 5, dans lequel le rayonnage comprend, en outre, au moins un écarteur (42, 44 ; 142, 144) pris en sandwich entre ledit élément porteur (33 ; 150) et au moins l'un des éléments parmi ladite feuille de métal supérieure (30 ; 130) et ledit panneau inférieur (31 ; 131).

7. Rayonnage selon la revendication 6, dans lequel ledit écarteur est formé par une pluralité de rouleaux (42, 44 ; 142, 144) encastrés dans moins l'un desdits éléments parmi ladite au moins une première couche adhésive (41 ; 141) et ladite au moins une seconde couche adhésive (43 ; 143) .

8. Rayonnage selon l'une quelconque des revendications 1 à 7, dans lequel le rayonnage s'étend généralement longitudinalement et ledit élément porteur (33) comprend une pluralité d'ondulations (40) de manière que ledit élément porteur (33) ait une forme ondulée générale qui s'étend transversalement à ladite tablette (5).

9. Rayonnage selon l'une quelconque des revendications 1 à 7, dans lequel élément porteur (150) a généralement une forme alvéolaire.

10. Rayonnage selon l'une quelconque des revendications 1 à 9, dans lequel élément porteur (33) est rigide et constitué de métal.

11. Rayonnage selon l'une quelconque des revendications 1 à 9, dans lequel élément porteur (150) est semi-rigide et constitué de carton.

12. Rayonnage selon l'une quelconque des revendications 1 à 11, dans lequel le rayonnage s'étend généralement longitudinalement et comporte des faces latérales (21, 22) ayant une forme de triangle rectangle.
